# EUROPEAN PATENT SPECIFICATION

(11) **EP 3 733 719 B1**
(45) Date of publication and mention of the grant of the patent: **24.05.2023**
(21) Application number: 18897854.8
(22) Date of filing: 27.12.2018
(51) Int. Cl.: C08F 2/00, C03C 17/30, C08F 4/40, C08F 292/00, C08J 7/04, C23C 26/00

(54) **A SUBSTRATE FOR FORMATION OF A POLYMER BRUSH, A PROCESS OF PRODUCING THE SUBSTRATE, AND A PRECURSOR SOLUTION FOR USE IN THE PROCESS**
EIN SUBSTRAT ZUR HERSTELLUNG EINER POLYMERBÜRSTE, EIN VERFAHREN ZUR HERSTELLUNG DES SUBSTRATS UND EINE VORLÄUFERLÖSUNG ZUR VERWENDUNG IM VERFAHREN
SUBSTRAT POUR FORMATION DE BROSSE POLYMÈRE, PROCÉDÉ DE PRODUCTION DE SUBSTRAT ET SOLUTION PRÉCURSEUR DESTINÉ À ÊTRE UTILISÉ DANS LE PROCÉDÉ

(30) Priority: 28.12.2017 JP 2017253122; 12.03.2018 JP 2018043997
(43) Date of publication of application: 04.11.2020
(73) Proprietor: NATIONAL INSTITUTE OF ADVANCED INDUSTRIAL SCIENCE AND TECHNOLOGY, Chiyoda-ku Tokyo 100-8921 (JP)
(72) Inventor: SATO, Tomoya, Nagoya-shi, Aichi 463-8560 (JP); URATA, Chihiro, Nagoya-shi, Aichi 463-8560 (JP); HOZUMI, Atsushi, Nagoya-shi, Aichi 463-8560 (JP)
(74) Representative: Vossius & Partner Patentanwälte Rechtsanwälte mbB
(86) International application number: PCT/JP2018/048125
(87) International publication number: WO 2019/131872

(56) References cited:
- WO-A1-2015/163383
- WO-A1-2015/170724
- WO-A1-2018/198876
- US-A1- 2002 127 415
- US-A1- 2013 178 588

## Description

### Field of the Invention

The present invention relates to a substrate for formation of a polymer brush, more particularly a substrate for formation of a polymer brush wherein a surface of the substrate is covered or coated with a polymerization initiator layer thereby enabling a polymer brush to be formed with the polymerization initiator layer as starting points, a process of producing the substrate, and a precursor solution used with the process.

### Background Art

Polymer brushes now attract attention as an effective material capable of modifying a solid surface. The polymer brushes are formed by providing a polymerization initiator layer on a surface of a substrate material and then bringing the polymerization initiator layer in contact with a monomer and a polymerization catalyst for the polymerization of the monomer thereby extending a polymer chain from the surface of the polymerization initiator layer, and the polymerization of the monomer is preferably carried out by the surface-initiated atom transfer radial polymerization (SI-ATRP process) capable of forming polymer chains having a narrow molecular weight distribution.

Thus, the formation of the polymerization initiator layer onto a substrate material is of importance; there is the need of providing a polymerization initiator suitable for the chemical characteristics of the substrate material.

A polymerization initiator layer is usually and generally formed by a process of forming polymerization initiator molecules on the surface of a substrate material in a gas or liquid phase.

For instance, silane coupling-based compounds are used for a substrate material comprising glass or silicon, thiols are used for a gold substrate material, and phosphoric acid compounds are used for an iron or aluminum-based substrate material.

Depending on the quality of a substrate material, however, it is required to pick up a compound well fit for chemical bonding to the substrate material, as disclosed in Patent Publication 1 ([0002]), Patent P Publication 2 ([0004]) or the like, resulting in the demand for a versatile process of forming a polymerization initiator layer.

For formation of a polymerization initiator layer by a gas-phase process wherein a vaporized organosilane such as aminosilane is used as an example, it is essentially required to carry out heat treatment within a large-sized reactor. While the formation of a polymerization initiator layer onto an inorganic substrate material has been carried out in the art, it is still considered difficult to provide the polymerization initiator layer on the surface of a resinous substrate material such as PET or polycarbonate one without detriment to the property and morphology of the substrate material.

When the polymerization initiator layer is formed by a liquid-phase process, a substrate material is dipped for a given time in a solution wherein an organosilane such as aminosilane is dissolved in an organic solvent; however, this process is unsuitable for processing or treating a large-sized substrate material. When the substrate material is formed of plastics, it is understood that although depending of the type of the organic solvent, the substrate material may possibly undergo some solvent attack by an extended dipping.

To graft or fix the polymerization initiators onto the surface of various substrate materials while such problems are solved, Patent Publication 1 comes up with a process making use of a polydopamine film wherein said polydopamine film is fixedly provided with polymerization initiators providing or defining polymerization reactionstarting points. However, said process involves a troublesome or retardant two-stage reaction wherein a dopamine solution is subjected to oxidative polymerization at room temperature to form a polydopamine film followed by fixation or grafting of the initiators, and basic conditions are necessary for formation of a dopamine-containing a polymerization initiator layer, rendering that process unfit for a substrate material for which basicity is not preferred.

Patent Publication 2 comes up with the use of a composite material in which a compound including a halogen group-containing polymerization initiation sites are incorporated in a crosslinked structure comprising a catechol or phenol derivative contained in urushiol or its analog, alleging that said composite material may simply be produced via a one-stage reaction within a short period of time, and bonded to various substrate materials such as a silicon substrate, a metallic substrate and a glass substrate as well as a plastic substrate inclusive of phenolic resin to provide a polymer-coated precursor. While this composite material is produced by mixing the catechol or phenol derivative with the compound including halogen group-containing polymerization initiation sites followed by curing, however, it is understood that upon mixing it is required to carry out ultrasonic treatment or the like, making sure of uniform dispersion. Further, there is another need of synthesis of raw materials and the use of much material or the like requires an additional cost, rendering the aforesaid process unfit for making use of large areas and mass production.

Thus, some special equipment and reaction/processing conditions are inevitable for conventional formation of a polymerization initiator layer on the surface of a substrate material, and the conventional process gives rise to problems in terms of simplicity and productivity. In particular, it is difficult to form a polymerization initiator layer on a large-area substrate material. For instance, the aforesaid processes are unsuitable for area enlargement and mass production making use of a roll-to-roll type film-making system.

As practiced in the art, on the other hand, a polymer brush has one potential application as a surface capable of showing oil repellency in water. With regard to such polymer brush, Patent Publication 3 discloses a process of pretreating a solid surface to be provided with a polymer brush wherein the solid surface is treated with a silane coupling agent having an amino group or a hydroxy group to introduce the amino group or hydroxy group in the solid surface, and the amino group or hydroxy group is then allowed to react with a 2-bromo-2-methylpropionic acid derivative thereby introducing in the solid surface a 2-bromoisobutylyl group that is a polymerization initiator group.

However, the process put forward in the aforesaid patent publication has for its object to obtain a polymer brush capable of showing good oil repellency after dipped in an aqueous solution having a predetermined pH value. To achieve this object, the "2-bromoisobutylyl group" that is a polymerization initiator group is introduced in the solid surface followed by polymerization of a specific water-soluble monomer. Thus, nothing is proposed at all about how to form a variety of polymer brushes simply and uniformly on the surface of various large-area substrate materials.

### Prior Art Publications

### Patent Publications

Patent Publication 1: JP(A) 2010-261001
Patent Publication 2: WO 2014/185361
Patent Publication 3: WO 2015/163383
Patent Publication 4: JP(A) 2013-213181

### Summary of the Invention

### Problems to be Solved by the Invention

As a result of studies made to solve the aforesaid problems with the prior art, the inventors have focused on a sol-gel process among polymerization initiator layer-forming processes, in which the troublesome procedure comprising ultrasonic treatment or the like upon the mixing of starting materials is dispensed with, and which is easily applied to a large area under atmospheric pressure with no need of pretreatments using ultraviolet rays, ozone, plasma or the like required so far for use of a polymer substrate material.

Referring to one of films formed by the sol-gel process, the inventors have already found that an organic-inorganic transparent hybrid film obtained by coating a precursor solution obtained by co-hydrolyzing and condensation polymerizing an organosilane and a metal alkoxide in a solution containing an organic solvent, water and a catalyst on the surface of a substrate material and then leaving it at rest for a given time at room temperature under atmospheric pressure is capable of adhering to a variety of substrate materials formed of metals, metal oxide films, alloys, semiconductors, polymers, ceramics, glasses and resins (see Patent Publication 4).

Referring to one of other processes, Patent Publication 3 as mentioned above discloses a process of coating on the surface of a solid a sol-gel solution containing 3-(2-bromoisobutylylamino)propyltrialkoxysilane or 3-(2-bromoisobutylyloxy)propyltrialkoxysilane and further including tetraalkoxysilane if required.

Given the foregoing, the inventors have made a further study of how to form a polymerization initiator layer using a precursor solution obtained by mixing a polymerization initiator group-containing organosilane with a metal alkoxide such as tetraalkoxysilane.

Consequently, the inventors have found that as an ester bond or an amide bond is included per molecule, it causes such a bond to be cleft by hydrolysis in the sol-gel solution, failing to fix or graft the polymerization initiator group in the film, or causes the polymerization initiator layer to be hydrolyzed during polymerization although depending on the monomer; with the method proposed as other process in Patent Publication 3, it is sometimes impossible to obtain any desired precursor solution.

More specifically, 3-(trimethoxysilylpropyl)-2-bromo-2-methylpropionate having an effect similar to that of 3-(2-bromoisobutylyloxy)propyltrialkoxysilane and tetraalkoxysilane were used for the preparation of a precursor solution, but it has been difficult to form a polymer brush because the polymerization initiator group is not introduced in the solid surface due to ester bond cleavage. Likewise, 2-bromo-2-methyl-N-(3-(triethoxylsilyl)propyl)propanamide having an effect similar to that of 3-(2-bromoisobutylylamino) propyltrialkoxysilane and tetraalkoxysilane were used for the preparation of a precursor solution, but it has been found that the precursor solution is gelled in the preparation stage. It has also been found that the polymerization initiator layer remains dissolved due to amide bond cleavage, rendering the formation of any polymer brush difficult.

Based on the aforesaid findings, an object of the present invention is to provide a substrate for formation of a polymer brush that ensures that when a sol-gel solution obtained by mixing a polymerization initiator group-containing organosilane with a metal alkoxide such as tetraalkoxysilane is used as a precursor solution to form a polymerization initiator layer on the surface of a variety of large-area substrate materials, a stable polymerization initiator layer can be formed with no occurrence of hydrolysis. Other objects of the invention are to provide a process of forming a stable polymerization initiator layer by using an unlikely-to-gel precursor solution for a sol-gel process wherein a polymerization initiator group-containing organosilane and an organic alkoxide are used, and to provide a precursor solution used with the process.

### Means for Solving the Problems

As a result of studies made to achieve the aforesaid objects, the inventors have found that the aforesaid problems can be solved by using an organosilane having no easy-to-hydrolyze functional group between Si and a polymerization initiator skeleton as said organosilane, when forming polymerization initiator layer on a surface of a substrate material by a sol-gel process using a polymerization initiator group-containing organosilane and a metal alkoxide.

The present invention has been achieved on the basis of the aforesaid findings, and provides the following means.
[1] A substrate for formation of a polymer brush, comprising a substrate material, and a polymerization initiator layer formed on a surface of said substrate material, characterized in that said polymerization initiator layer contains a hydrolysate/condensation polymer of an organosilane and a metal alkoxide, wherein said organo-silane is a polymerization initiator group-containing organosilane having the following formula (1):

   X-R¹-(Ph)ₖ-(R²)ₘ-Si-R³ₙR⁴₃₋ₙ ··· (I)

   where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an al koxy having 1 to 3 carbon atoms or chloro group, R⁴ stands for an alkyl group having 1 to 6 carbon atoms, k is 0 or 1, m is 0 or 1, and n is 1, 2 or 3.
[2] The substrate for formation of the polymer brush according to [1], characterized in that said organosilane further contains a second organosilane having the following formula (II):

   R⁵-(Ph)ₚ-(R⁶)_{q}-Si-R⁷ᵣR⁸₃₋ᵣ ··· (II)

   where R⁵ stands for a hydrogen atom or an alkyl group having 1 to 4 carbon atoms, Ph stands for a phenylene group, R⁶ stands for a C1 to C10 alkylene group optionally bound
   via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.
[3] The substrate for formation of the polymer brush according to [1] or [2], characterized in that said polymerization initiator layer has a thickness of 10 to 20000 nm.
[4] The substrate for formation of the polymer brush according to any one of [1] to [3], wherein said substrate material is formed of a resin.
[5] The substrate for formation of the polymer brush according to [4], wherein said resin is at least one selected from the group consisting of a polyethylene terephthalate resin, a polycarbonate resin, an acrylic resin, a silicone resin, and an ABS resin.
[6] A precursor solution for producing the substrate for formation of the polymer brush according to any one of [1] to [5], characterized by containing an organic solvent, water, a sol-gel catalyst, a metal alkoxide, and a polymerization initiator group-containing organosilane, wherein said organosilane has the following formula (I):

   X-R¹-(Ph)ₖ-(R²)ₘ-Si-R³ₙR⁴₃₋ₙ ··· (I)

   where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.
[7] The precursor solution according to [6], characterized by further containing a second organosilane having the following formula (II):

   R⁵-(Ph)ₚ-(R⁶)_{q}-Si-R⁷ᵣR⁸₃₋ᵣ ··· (II)

   where R⁵ stands for a hydrogen atom or an alkyl group having 1 to 4 carbon atoms, Ph stands for a phenylene group, R⁶ stands for a C1 to C10 alkylene group optionally bound
   via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.
[8] A substrate material, which is provided with the polymer brush in which monomers are polymerized with said polymerization initiator groups of the substrate for formation of the polymer brush according to any one of [1] to [5] as starting points.
[9] The substrate material provided with the polymer brush according to [8], wherein a plating layer is formed on a surface of said substrate material.
[10] A process of producing a substrate for formation of a polymer brush, wherein a precursor solution comprising an organic solvent, water, a sol-gel catalyst, a metal alkoxide, and a polymerization initiator group-containing organosilane is coated onto a substrate material, and polymerization initiator layer is formed by a sol-gel process on said substrate material, characterized in that said organosilane has the following formula (I):

   X-R¹-(Ph)ₖ-(R²)ₘ-Si-R³ₙR⁴₃₋ₙ ··· (I)

   where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.
[11] The process of producing the substrate for formation of the polymer brush according to [10], characterized in that said precursor solution further contains a second organosilane having the following formula (II):

   R⁵-(Ph)ₚ-(R⁶)_{q}-Si-R⁷ᵣR⁸₃₋ᵣ ··· (II)

   where R⁵ stands for a hydrogen atom or an alkyl group having 1 to 4 carbon atoms, Ph stands for a phenylene group, R⁶ stands for a C1 to C10 alkylene group optionally bound
   via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.
[12] A process of producing a polymer brush comprising:
   a step of coating a precursor solution comprising an organic solvent, water, a sol-gel catalyst, a metal alkoxide, and a polymerization initiator group-containing organosilane on a substrate material, and forming a polymerization initiator layer having a thickness of 10 to 20000 nm by a sol-gel process on said substrate material thereby obtaining a substrate for formation of a polymer brush, and
   a polymer brush growth step of polymerizing the monomer with the polymerization initiation group of said substrate for formation of the polymer brush as a starting point for growth of the polymer brush, characterized in that said organosilane has the following formula (I):

      X-R¹-(Ph)ₖ-(R²)ₘ-Si-R³ₙR⁴₃₋ₙ ··· (I)

      where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.
[13] The process of producing the polymer brush according to [12], characterized in that said precursor solution further contains a second organosilane having the following formula (II):

   R⁵-(Ph)ₚ-(R⁶)_{q}-Si-R⁷ᵣR⁸₃₋ᵣ ··· (II)

   where R⁵ stands for a hydrogen atom or an alkyl group having 1 to 4 carbon atoms, Ph stands for a phenylene group, R⁶ stands for a C1 to C10 alkylene group optionally bound
   via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.
[14] A process of forming a plating layer on a polymer brush side surface of the substrate material, wherein after forming the polymer brush by the process according to [12] or [13] on the surface of the substrate material, a plating catalyst is fixed to the polymer brush formed on said substrate material, followed by application of electroless plating.

### Advantages of the Invention

According to the present invention, it is possible to provide a substrate for formation of a polymer brush that ensures that when a sol-gel solution obtained by mixing a polymerization initiation group-containing organosilane with a metal alkoxide such as tetraalkoxysilane is used as a precursor solution to form a polymerization initiator layer on the surface of a variety of large-area substrate material, a stable polymerization initiator layer can be formed with no occurrence of hydrolysis. According to the present invention, it is also possible to obtain a substrate for formation of a polymer brush that includes a polymerization initiator layer needed for the SI-ATRP process or the like. According to the present invention, it is further possible to form a polymer brush having enhanced adherence on the surface of a variety of large-area substrate materials thereby making use of a film-making system of the roll-to-roll type or the like for the purpose of area enlargement and mass production.

### Modes for Carrying Out the Invention

The present invention relates to a substrate for formation of a polymer brush wherein a solid surface is provided with a polymerization initiator layer containing the polymerization initiator group necessary for formation of the polymer brush, characterized in that said polymerization initiator layer is obtained by the co-hydrolysis and condensation polymerization of an organosilane and a metal alkoxide in a solution containing or comprising an organic solvent, water, and a sol-gel catalyst, and said organosilane contains a polymerization initiator group-containing organosilane having the following formula (I):

X-R¹-(Ph)ₖ-(R²)ₘ-Si-R³ₙR⁴_{3-N} ··· (I)

where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.

In the substrate for formation of the polymer brush according to the invention, polymer chains are extended by the SI-ATRP process from the surface of the polymerization initiator layer, resulting in the formation of the polymer brush.

The present invention is also concerned with a process of forming a polymerization initiator layer containing the polymerization initiator group necessary for formation of a polymer brush on a surface of a substrate material as well as a precursor solution used with said process, characterized in that a precursor solution obtained by co-hydrolysis and condensation polymerization of said polymerization initiator group-containing organosilane and metal alkoxide in a solution comprising an organic solvent, water and a sol-gel catalyst, and leaving the substrate material at rest for a given time at room temperature under atmospheric pressure for volatilization of the solvent and crosslinking. It is here noted that heating may also be applied so as to make the drying time of the coated film short.

Further, the present invention relates to a polymer brush polymerized by the SI-ATRP process from the surface of the aforesaid polymerization initiator layer, characterized in that the polymer brush is obtained by dipping the aforesaid polymerization initiator layer in a solution containing a monomer, water and an organic solvent optionally with a metal salt, a ligand, a reducing agent, etc., leaving the initiator layer at rest for a given time at room temperature under atmospheric pressure, and washing a surface thereof, and that the obtained surface shows water/oil repellency, slippage capability, droplet removal capability, fingerprint resistance, antifogging capability, slidability, corrosion resistance, antibacterial activity, etc.

Furthermore, the present invention relates to a process of forming a polymer brush by polymerization from the surface of the aforesaid polymerization initiator layer by the SI-ATRP process, characterized in that the aforesaid polymerization initiator layer is dipped in a solution containing a monomer, water and an organic solvent optionally with a metal salt, a ligand, a reducing agent, etc., and left at rest for a given time at room temperature under atmospheric pressure, and washed on the surface.

The present invention as described above ensures that the polymer brush having enhanced adherence is formed on a variety of large-area substrate materials thereby giving the surface of the substrate material a variety of functions such as water/oil repellency, super-hydrophilicity, slippage capability, droplet removal capability, fingerprint resistance, antifogging capability, slidability, corrosion resistance, antibacterial activity and capability of carrying a plating catalyst.

In the invention, the metal alkoxide and the polymerization initiator group-containing organosilane are mixed together in a (metal alkoxide/organosilane) molar ratio of 4 or higher, preferably 5 to 400, and most preferably 10 to 80, the obtained polymer initiator layer is capable of adhering firmly to a substrate material selected from the group consisting of a metal, a metal oxide film, an alloy, a semiconductor, a polymer, ceramics, a glass, a resin, wood, a fiber and paper; and the polymerization initiator layer is capable of adhering firmly to a hybrid surface comprising at least one selected from the group consisting of a plane, a curved surface, an uneven or irregular surface and a porous surface. It is here to be noted that when a numerical range or the like is expressed in terms of "- to -", it will include the numerals of both its ends.

In one preferred embodiment of the invention, the molar ratio between the polymerization initiator group-containing and the metal alkoxide is regulated such that when the substrate material is dipped in the polymerization solution, solvent cracks and film peeling are prevented or held back, resulting in the formation of a uniform or even polymer brush.

The present invention will now specifically be described with reference to some embodiments inclusive of its best mode.

### Substrate Materials

The substrate materials usable here include any desired materials such as metals, metal oxide films, alloys, semiconductors, polymers, ceramics, glasses, resins, woods, papers, and fibers. Specific examples of the substrate material preferably include copper, brass, silicon, polyethylene terephthalate resins, polycarbonate resins, acrylic resins, silicone resins, ABS resins, glasses and woods, among which resins such as polyethylene terephthalate resins, polycarbonate resins, acrylic resins, silicone resins, and ABS resins are used.

The substrate materials may have any desired shape such as a sheet shape, an uneven shape, a powdery shape, a tubular shape, a porous shape, and a fibrous shape.

Any particular pretreatment may not be needed in the invention, but any substrate material may be used after pretreated as by washing/activation with plasmas or UV.

Alternatively, any substrate material may be used after provided with any easy-to-bond layer.

### Polymerization Initiator Group-Containing Polymerization Initiator Layer

The polymerization initiator group-containing polymerization initiator layer according to the invention is obtained by co-hydrolysis and condensation polymerization of the polymerization initiator group-containing organosilane and metal alkoxide in a solution comprising an organic solvent, water and a sol-gel catalyst with a thickness of preferably 10 to 20000 nm, more preferably 100 to 1000 nm, and most preferably 250 to 700 nm.

### Polymerization Initiator Group-Containing Organosilane

Usually, an organohalogenide having a highly reactive carbon-halogen bond is used for the polymerization initiator in the SI-ATRP process.

The polymerization initiator group-containing organosilane according to the invention, too, is an organohalogen compound having a highly reactive carbon-halogen bond and represented by the following formula (I) :

X-R¹-(Ph)ₖ-(R²)ₘ-Si-R³ₙR⁴₃₋ₙ ··· (I)

where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.

That is, the organosilane of the invention represented by Formula (1) is characterized by including an X-R¹-(Ph)ₖ-(R²)ₘ- group as the polymerization initiator group and an R³ group as a functional group with no easy-to-hydrolyze functional group between X-R¹- functioning as the polymerization initiator group and Si.

In Formula (I), X stands for a halogen atom preferably selected from chlorine (Cl), bromine (Br) or iodine (I), and R¹ stands for an alkylene group having 1 to 3 carbon atoms that may have a branch.

A specific X-R¹- group is exemplified as by 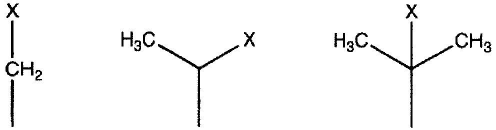 where X stands for chlorine, bromine or iodine. More preferably, there is the mention of a chloromethyl group, 2-chloropropyl group, and 2-bromopropyl group.

There may be a phenylene group present between the X-R¹- group and Si, and X-R¹-Ph- may be a chloromethylphenyl group or a bromomethylphenyl group as an example.

Further between the aforesaid X-R¹- and Si or between the aforesaid X-R¹-Ph- and Si, there may be a C1 to C10 alkylene group represented by -R²-, optionally bound via an oxygen atom. For instance, one example of X-R¹-Ph-R²- is a chloromethylphenylethyl group or the like.

The number (n) of R³- in the aforesaid polymerization initiator group-containing organosilane is 1, 2 or 3, and an alkoxy or chloro group may be selected as R³-. A preferable example of the alkoxy group includes a methoxy group, an ethoxy group, a propoxy group or an isopropoxy group. For the chloro group-containing silane, hydrochloric acid produced after hydrolysis may be used as a catalyst for the sol-gel reaction.

R⁴- in the aforesaid organosilane containing polymerization initiator group stands for an alkyl group having 1 to 6 carbon atoms, and its number (3-n) is 2, 1 or 0 as determined depending on the number (n) of R³-.

Specific examples of the polymerization initiator group-containing organosilane include compounds having the following formulae. 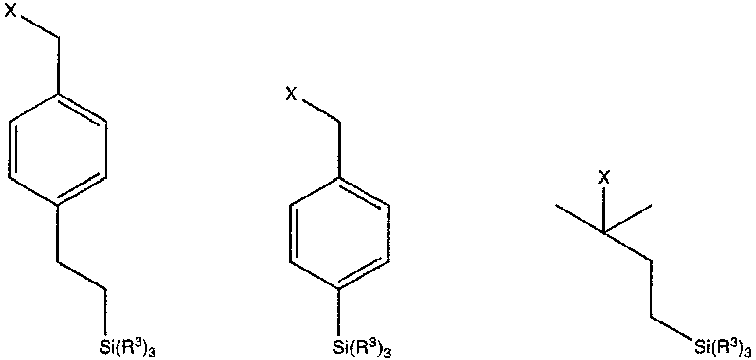 where X=chlorine or bromine, and R³ = chlorine or methoxy group (R³=methoxy or ethoxy group). More preferably, there is the mention of (chloromethyl)phenylethyl-trichlorosilane, (chloromethyl)phenylethyl-trimethoxysilane, (chloromethyl)phenyltrichlorosilane, (chloromethyl)phenyl-trimethoxysilane, (bromomethyl)-pentyltrimethoxysilane, triethoxy(bromomethylpentyl)-silane, (chloromethyl)pentyl-trimethoxysilane, and triethoxy(chloromethylpentyl)- silane.

### Second Silane

The organosilane in the hydrolysate/condensation polymer of the aforesaid organosilane and metal alkoxide may include, in addition to the polymerization initiator group-containing organosilane having the aforesaid formula (I), the second organosilane having the following formula (II):

R⁵-(Ph)ₚ-(R⁶)_{q}-Si-R⁷ᵣR⁸₃₋ᵣ ··· (II)

where R⁵ stands for a hydrogen atom or an alkyl group having 1 to 4 carbon atoms, Ph stands for a phenylene group, R⁶ stands for a C1 to C10 alkylene group optionally bound
via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.

The second organosilane having the aforesaid formula (II) is an organosilane free from any polymerization initiator group, wherein R⁵ is positioned in place of X-R¹ functioning as the polymerization initiator group in the aforesaid formula (I). R⁵ stands for a hydrogen atom or an alkyl group having 1 to 4 carbon atoms, wherein said alkyl group may have a branch.

Between the aforesaid R⁵ and Si there may be a phenylene group (-Ph-) present, and an example of R⁵-Ph-may include a phenyl group, a methylphenyl group, an ethylphenyl group or the like.

Further, between the aforesaid R⁵- and Si or between the aforesaid R⁵-Ph- and Si, there may be a C1 to C10 alkylene group optionally bound via an oxygen atom, and one example of R⁵-Ph-R⁶- may include a methylphenylethyl group or the like.

The number (r) of R⁷- in the aforesaid second organosilane is 1, 2 or 3, and an alkoxy group or a chloro group may be selected as R⁷-. A preferable example of the alkoxy group is a methoxy group, an ethoxy group, a propoxy group, an isopropoxy group or the like. For the silane having a chloro group, hydrochloric acid produced after hydrolysis may be used as a catalyst for the sol-gel reaction.

R⁸- in the aforesaid second organosilane is an alkyl group having 1 to 6 carbon atoms, and its number (3-r) is 2, 1 or 0 as determined depending on the number (r) of R7-.

Specifically, the second organosilane represented by the aforesaid formula (II) includes analogs of the organosilane recited in [0037] out of which the halogen atom is excluded; more preferably, it includes phenyltriethoxysilane, phenyltrimethoxysilane, phenylpropyltriethoxysilane, phenylpropyltrimethoxysilane, propyltriethoxysilane, propyltrimethoxysilane or the like.

The use of a mixture of the second organosilane having the aforesaid formula (II) with the polymerization initiator group-containing organosilane having the aforesaid formula (I) allows for control of the polymerization initiation point.

The second organosilane may be mixed with the polymerization initiator group-containing organosilane represented by the aforesaid formula (I) in a ratio of 1% by volume to 10000% by volume, and preferably 10% by volume to 100% by volume.

### Metal Alkoxide

The metal alkoxide usable here includes, but is not limited to, those known so far in the art. For instance, there is the mention of a metal alkoxide in which a molecule containing at least two alkoxy groups or tetraalkoxysilane has an oligomeric configuration with a metal atom as center, or the following compounds having an effect equal or similar thereto.

That is, the metal alkoxide is exemplified by tetramethoxysilane, tetraethoxysilane, tetra-n-propoxysilane, tetra-i-propoxysilane, tetra-n-butoxysilane, tetra-t-butoxysilane, triethoxyaluminum, tri-n-propoxyaluminum, tri-i-propoxyaluminum, tri-n-butoxyaluminum, tri-t-butoxyaluminum, dimethoxycalcium, diethoxycalcium, di-i-propoxycalcium, di-n-butoxycalcium, triethoxyiron, tetra-methoxygermanium, tetraethoxygermanium, tetra-i-propoxy-germanium, tetra-n-butoxygermanium, tetra-t-butoxygermanium, tetramethoxyhafnium, tetraethoxyhafnium, tetra-i-propoxyhafnium, tetra-n-butoxyhafnium, tetra-t-butoxyhafnium, trimethoxyindium, triethoxyindium, tri-i-propoxyindium, tri-n-butoxyindium, tri-t-butoxyindium, pentamethoxytantalum, pentaethoxytantalum, penta-i-propoxytantalum, penta-t-butoxytantalum, penta-n-butoxytantalum, tetramethoxytitanium, tetraethoxy-titanium, tetra-i-propoxytitanium, tetra-n-butoxy-titanium, tetra-t-butoxytitanium, tetramethoxytin, tetra-ethoxytin, tetra-i-propoxytin, tetra-n-butoxytin, tetra-t-butoxytin, polydialkoxysilane or the like.

A preferable metal alkoxide in particular is exemplified by a compound represented by Si(OR⁵)₄ where R⁵ stands for a lower alkyl group such as a methyl group, an ethyl group, and a propyl group.

### Organic Solvent

Using a precursor solution comprising an organic solvent, water, a sol-gel catalyst, a metal alkoxide and a polymerization initiator group-containing organosilane optionally with a second organosilane (the polymerization initiator group-containing organosilane and the second organosilane will sometimes be collectively called the "organosilane"), the polymerization initiator group-containing polymerization initiator layer according to the invention is formed by the sol-gel process on the aforesaid substrate material.

To form a transparent, uniform coating film according to the invention, it is desired that the organic solvent used as a part of the precursor solution be miscible with a small amount of water and capable of dissolving a condensation polymer of the organosilane/metal alkoxide, and that it evaporate off as soon as the precursor solution is coated onto the substrate material. In other words, it is herein preferable to use an organic solvent having a vapor pressure higher than that of water for the preparation of the precursor solution.

### Water

Referring here to the amount of water to be added, it is desired that water be contained in an amount exceeding the number of functional groups for the purpose of allowing all reactive functional groups contained in the precursor solution to be hydrolyzed to form the M-OH groups. While a coating film may somewhat be formed even in an amount of water less than the aforesaid number, yet it is not preferred because, thanks to insufficient hydrolysis, an unhydrolyzed portion of the organosilane and metal alkoxide vaporizes off during treatment, resulting in poor yields.

If the above-exemplified organic solvent is used to adjust the concentration of the organosilane and metal alkoxide, it is then possible to control film thickness within the range of 10 to 20000 nm, because when a certain amount of the precursor solution is added dropwise onto the surface of the substrate material to form a coating film incidental to the volatilization of the solvent, the higher the concentration of the organosilane and metal alkoxide or solid components contained in the precursor solution, the more solid is precipitated on the surface of the substrate material.

It is noted that the organosilane has a surface energy lower than that of the M-OH group generated from the metal alkoxide in the process of condensation polymerization, meaning that the organosilane is likely to remain concentrated on the surface of the polymerization initiator layer in the process of forming the polymerization initiator layer.

It follows that the surface concentration of the organosilane grows higher than its bulk (organosilane/metal alkoxide composition ratio).

### Sol-Gel Catalyst

It is desired for the precursor solution to make use of a catalyst for accelerating hydrolysis of the reactive functional groups of the organosilane and metal alkoxide (to form the M-OH group); a catalyst effective for acceleration of hydrolysis of the alkoxy group is used as said sol-gel catalyst.

It is desired to control the pH of said precursor solution by the catalyst thereby stabilizing the organosilane/metal alkoxide condensation polymer. For instance, when the organosilane contains an alkoxysilyl group, it is then preferable to use an organic acid such as hydrochloric acid, and p-toluenesulfonic acid thereby controlling the pH to 1 to 3.

When the organosilane contains a chlorosilyl group, hydrochloric acid generated as a by-product of said organosilane after hydrolysis may be used as the catalyst for the sol-gel reaction without recourse to any particular catalyst.

### How to Form the Polymerization Initiator Layer

To form the polymerization initiator layer according to the invention, the precursor solution comprising an organic solvent, water, a sol-gel catalyst, a metal alkoxide and a polymerization initiator group-containing organosilane optionally with a second organosilane is coated onto a substrate material, and formed by the sol-gel process on said substrate material.

There is no particular limitation on how to coat the precursor solution provided that the volatilization of the solvent is accelerated; for instance, any one selected from the group consisting of spin coating, dip coating, roller coating, bar coating, ink jet coating, gravure coating, and spraying is available.

It is preferred that by accelerating the volatilization of the solvent after the coating of the precursor solution, the concentration of the organosilane and metal alkoxide in the precursor solution is regulated to control a post-drying thickness of the polymerization initiator layer within a range of 10 to 20000 nm.

While there is no particular limitation on the drying temperature of the polymerization initiator layer with the proviso that the solvent used can be volatilized off, the drying temperature is preferably 0 to 150°C, and more preferably room temperature to 100°C.

The drying time of the polymerization initiator layer is preferably 1 minute to 24 hours, although varying with the solvent used and temperature.

For formation of the polymerization initiator layer, the roll-to-roll type film-making system may also be used due to its good mass productivity.

### Formation of the Polymer Brush

According to the invention, any desired polymerizable monomer having a vinyl group applicable to the SI-ATRP process may be used, while the polymerization initiator layer formed on the substrate for formation of the polymer brush is set as a starting point, to form the polymer brush according to the invention on the surface of a variety of large-area substrate materials. Monomer polymerization conditions may optionally be selected depending on the monomer species used. Polymerization temperature and time may optionally, or not exclusively, be set depending on the polymerization initiator and monomer species used as well as the desired function(s) and polymer brush thickness.

In the invention, although there is no particular limitation on how to carry out polymerization, it is preferable to use a process of dipping a substrate material having a polymerization initiator layer in a polymerization solution regulated by a monomer, an organic solvent and so on, a process of dropwise adding or direct coating of the polymerization solution onto a substrate material having a polymerization initiator layer formed on it, and so on.

### Polymerization Solution for Formation of the Polymer Brush

In a preferable embodiment of the invention, the polymerization solution provided for formation of the polymer brush contains a monomer, a metal salt for catalysts, a metal ligand, and a reducing agent.

In an embodiment of the invention, the monomer concentration in the polymerization solution is preferably 1 to 100% by volume, and more preferably 5 to 50% by volume. Depending on the monomer concentration and polymerization time, it is possible to control polymer brush thickness within a range of 1 to 2000 nm.

The thickness of the polymer brush to be formed is preferably 1 to 2000 nm, and more preferably 1 to 1000 nm.

In the invention, while there is no particular limitation on the monomer type, it is understood that acrylic acid and its ester (dimethylaminoethyl methacrylate), methacrylic acid and its ester (methyl methacrylate), styrene and its derivative (styrene), and mixtures thereof may be exemplified.

The polymerization solution may further contain an organic solvent capable of being miscible with the monomer. While there is no particular limitation on the solvent, it is preferable to use an alcohol (methanol, ethanol, and isopropanol), an organic solvent (anisole, dimethylformamide, and acetonitrile), water, or a mixture thereof.

In the invention, a polymerization solution obtained by mixing an alcohol, water and an organic solvent in any desired ratio may be used depending on the monomer type, wherein said ratio is, but not limited to, preferably 10 to 90% by volume, and more preferably 40 to 60% by volume.

In the invention, there is no particular limitation on the metal salt for catalysts usable in the aforesaid polymerization solution; those known so far in the art may be used. For instance, use may be made of metal chlorides or bromides comprising copper, iron, cobalt, titanium, molybdenum or ruthenium as a metal element and having any one of monovalent, divalent and trivalent charges. Specifically, there is the mention of copper (I) chloride, copper (II) chloride, copper (I) bromide, copper (II) bromide, titanium (II) chloride, titanium (III) chloride, titanium (IV) chloride, titanium (IV) bromide, iron (II) chloride, iron (III) chloride, iron (II) bromide, iron (III) bromide, cobalt (II) chloride, cobalt (II) bromide, nickel (III) chloride, nickel (II) bromide, molybdenum (III) chloride, molybdenum (V) chloride, ruthenium (III) chloride or the like.

In the invention, the molar ratio of metal salt for catalysts relative to monomer is preferably 0.004 to 0.03.

In the invention, there is no particular limitation on the metal ligand usable in the aforesaid polymerization solution; those known so far in the art may be used. For instance, use may be made of metal ligands that form a complex with a metal chloride or bromide and has reactivity in the SI-ATRP process. Specifically, there is the mention of reaction solutions or the like that are 2,2'-bipyridyl, 4,4'-dimethyl-2,2'-bipyridyl, 4,4'-di-t-butyl-2,2'-bipyridyl, 4,4'-dinonyl-2,2'-bipyridyl, N,N,N',N",N"-pentamethyldiethylenetriamine, tris(2-pyridylmethyl)amine, and ethylenediamine.

In the invention, the molar ratio of metal ligand relative to metal salt for catalysts used may vary optionally with the type of metal salt for catalysts and metal ligand used; that molar ratio is preferably 1:1 to 1:3.

In the invention, the aforesaid polymerization solution may contain a reducing agent capable of reducing the metal in the aforesaid complex.

By way of example but not by way of limitation, the reducing agent used here includes Cu(O), AIBN, ascorbic acid, sodium ascorbate, tin(II) 2-ethylhexanoate, etc., among which ascorbic acid that has less environmental load and strong reducing action is most preferred.

In the invention, the reducing agent should preferably be uniformly dissolved in the polymerization solution, but uniform dissolution is not always needed.

In the invention, the molar ratio of reducing agent relative to metal salt is preferably 1:0.30 to 1:50, and most preferably 1:1. If the molar ratio of reducing agent relative to metal salt for ATRP catalyst is at least 0.30, the reducing agent can then function as a reductant capable of holding back a lowering of the concentration of the metal salt for ATRP catalysts (e.g., copper (I) chloride), and if it is 50 or lower, it is then possible to hold back polymerization termination.

The present invention has such advantages as mentioned below.
(1) The polymerization initiator layer necessary for the SI-ATRP process may be formed on the surface of a variety of substrate materials in a simple yet uniform way.
(2) By regulation of the concentration of the organo-silane and metal alkoxide relative to the organic solvent, it is possible to gain optional control of the thickness of the polymerization initiator layer within the range of (10 to 20000 nm) .
(3) The post-preparation precursor solution, because of remaining stabilized, may be used over an extended period of time.
(4) The aforesaid polymerization initiator layer, because of being no in need of heating treatment and being capable of being cured at room temperature, may be formed even on a polymer, paper, resin or wood having low heatproof temperature.
(5) By regulation of the content of the polymerization initiator group-containing organosilane and the content of the second organosilane, the hardness and flexibility of the polymerization initiator layer are so optionally adjusted that said polymerization initiator layer can be formed even on a highly flexible substrate material such a sheet-form polymer, a metal film or paper, and it is possible to prevent the layer from cracking and peeling off the substrate material upon bending of the substrate material, etc.
(6) The polymer brush layer polymerized out of a vinyl monomer may provide a cover over the surface of a variety of substrate materials.
(7) Depending on the polymerization time and monomer species, it is possible to gain optional control of the thickness of the resultant polymer brush.
(8) The polymer brush formed by the SI-ATRP process, because of being bonded to the aforesaid polymerization initiator layer by way of covalent bonding, is enhanced in terms of adherence and durability.
(9) The aforesaid polymer brush, because of being capable of being formed at room temperature without recourse to heating treatment in particular, may be formed on the substrate material such as a polymer, paper, resin or wood having low heatproof temperature by way of the aforesaid polymerization initiator layer.
(10) The aforesaid polymerization initiator layer and polymer brush, because of having high transparency, may impart functions to the surface of the substrate material without detrimental to design capability while the appearance of the substrate material to be treated remains intact.
(11) The aforesaid polymerization initiator layer and polymer brush, because of being able to be formed and polymerized by various means inclusive of brushing in the air, do not impose any limitation on substrate material size. For instance, it is possible to treat large areas as by a roll-to-roll type having good mass productivity, and so on.
(12) By optional changing of the monomer, the aforesaid polymer brush makes it possible to gain optional regulation of the wettability of its surface.
(13) The present invention provides a novel method of achieving the formation of a polymer brush on a variety of large-area substrate materials, which has been considered difficult so far in the art. By the formation of the polymer brush, for instance, it is possible to provide a novel, more effective surface treatment technology capable of imparting functions to the surface of a substrate material, inclusive of improvements in the capability of removing raindrops out of glasses for automobiles and building materials, securing visibility by impartment of antifogging feature, preventing contaminations, controlling water flows through µ-TASs, biochips or the like, controlling micro-water droplets (mist) through water-soluble ink jet nozzles or the like, preventing corrosion of metals/wood materials, improving the releasability of moldings out of nanoimprinting molds, and preventing adhesion of fingerprints on touch panel displays, and so on.
(14) By making use of the catalyst carrying function of the polymer brush, it is possible to form a plating layer having enhanced adhesion on the surface of the substrate material, on which the polymer brush of the invention is provided.

### Examples

By way of example but not by way of limitation, the present invention will now be explained in greater details with reference to the following preferable examples.

It is here understood that the mass of a solid material such as copper (II) chloride in each example is converted to, and indicated by, a part by volume on the basis of the density and purity of that material (commercially available).

### Example 1

(chloromethyl)phenylethyltrimethoxysilane (0.0088, 0.141, 0.564 parts by volume; called Examples 1-1, 1-2, 1-3 in order) or (chloromethyl)phenyltrimethoxysilane (0.564 parts by volume; called Example 1-4) was added to a mixed solution comprising a 0.01M HCl aqueous solution (1 part by volume), TEOS (2.8 parts by volume) and EtOH (8 parts by volume), and stirred at room temperature for 24 hours to prepare a precursor solution that, in turn, was added dropwise onto a silicon wafer, then spin-coated (2000 rpm for 10 seconds), and then dried at room temperature for 24 hours to form polymerization initiator layer on the surface of the silicon wafer.

2-(dimethylamino)ethyl methacrylate (5.5 parts by volume), copper (II) chloride (4 parts by volume), N,N,N',N",N''-pentamethyldiethylenetriamine (7 parts by volume), sodium ascorbate (1 part by volume) and water (1 part by volume) were mixed into a polymerization solution. The aforesaid silicon wafer having the polymerization initiator layer formed on it was dipped in the polymerization solution for 2 hours to form a polymer brush on the surface of the substrate material.

The film thickness was measured by reflection spectroscopy using a microscope OPTELICS (registered trademark) HYBRID (Lasertec Co., Ltd.), and the static angle of contact of the polymer brush with water (2 µL) was measured at room temperature with the use of a roomtemperature automated contact angle meter DM-501H1 (Kyowa Interface Science Co., Ltd.). Here note that the film thickness was measured in one place of the polymerization initiator layer and that the value of the static angle of contact is indicated by an average worked out of measurements in three places of the polymerization initiator layer

The thicknesses of the obtained polymerization initiator layers, the results of measurement of the static angle of contact of the polymer brushes with water, and their appearances are set out in Table 1.

As shown in Table 1, it has been found that the obtained polymerization initiator layers are all transparent, and the thickness of the polymerization initiator layers depends on its composition (with the component ratios shown in the table), as measured by reflection spectroscopy.

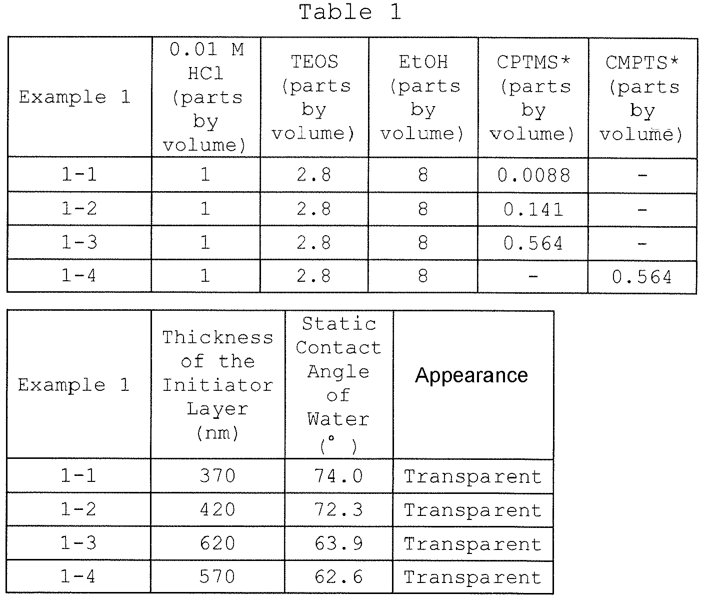

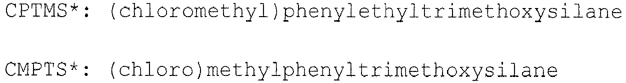

### Example 2

(Chloromethyl)phenylethyltrimethoxysilane and phenyltriethoxysilane (0.5076 parts by volume/0.0564 parts by volume, 0.3948 parts by volume/0.1692 parts by volume, 0.282 parts by volume/0.282 parts by volume; called Examples 2-1, 2-2, 2-3 in order) were added to a mixed solution comprising 0.01M HCl (1 part by volume), TEOS (2.8 parts by volume) and EtOH (8 parts by volume), and stirred at room temperature for 24 hours to prepare a precursor solution that, in turn, was added dropwise onto a silicon wafer, then spin-coated (2000 rpm for 10 seconds), and then dried at room temperature to form polymerization initiator layer on the surface of the silicon wafer.

2-(Dimethylamino)ethyl methacrylate (5.5 parts by volume), copper (II) chloride (4 parts by volume), N,N,N',N",N"-pentamethyldiethylenetriamine (7 parts by volume), sodium ascorbate (1 part by volume) and water (1 part by volume) were mixed into a polymerization solution. The aforesaid silicon wafer having the polymerization initiator layer formed on it was dipped in the polymerization solution for 2 hours to form a polymer brush on the surface of the substrate material.

The thickness of the obtained polymerization initiator layers, the results of measurements of the static contact angle of water of the polymer brushes with water, and their appearances are set out in Table 2.

As shown in Table 2, it has been found that the obtained polymerization initiator layers are all transparent.

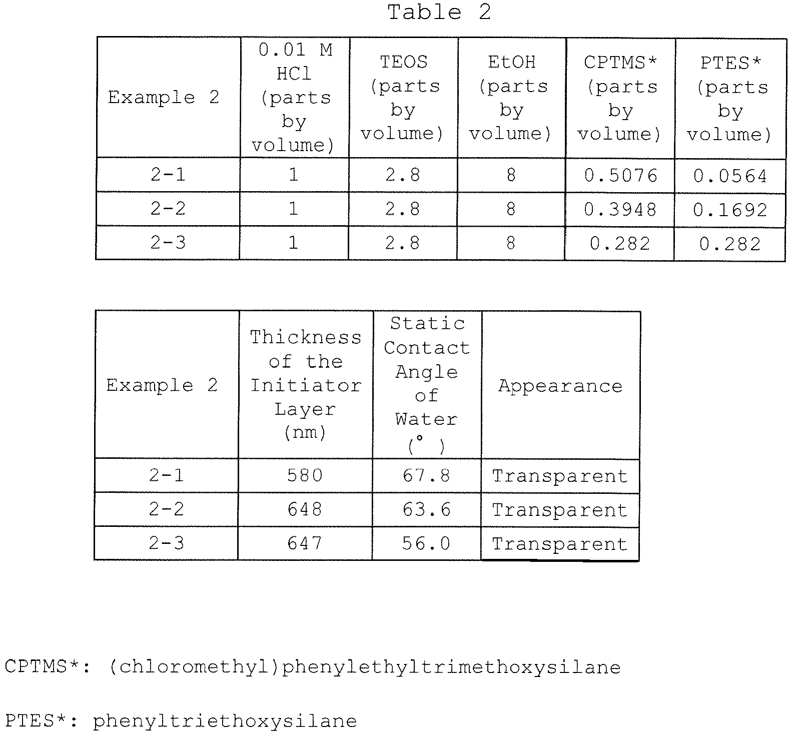

### Example 3

In the examples disclosed here, the silicon wafer of Examples 1 to 3 having the polymerization initiator layer formed on it was used to form various polymer brushes under the following conditions.

Various monomers set out in the following Table 3 (in the parts by volume set out in Table 3), copper (II) chloride (4 parts by volume), N,N,N',N",N''-pentamethyldiethylenetriamine (7 parts by volume), sodium ascorbate (1 part by volume) and water or ethanol (1 part by volume) were mixed into a polymerization solution. The aforesaid silicon wafer having the polymerization initiator layer formed on it was dipped in the polymerization solution for 2 hours to form a polymer brush on the surface of the substrate material (Examples 3-1 to 3-16).

The results of measurement of the static angles of contact of the obtained polymer brushes with water and their appearances are set out in Table 3.

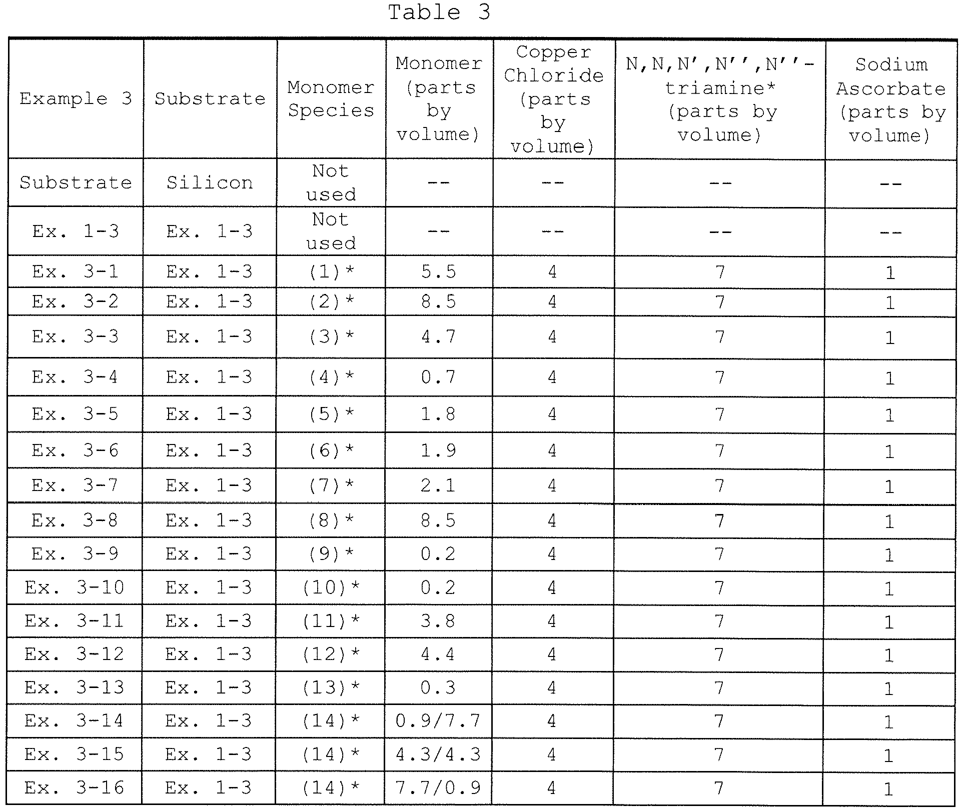

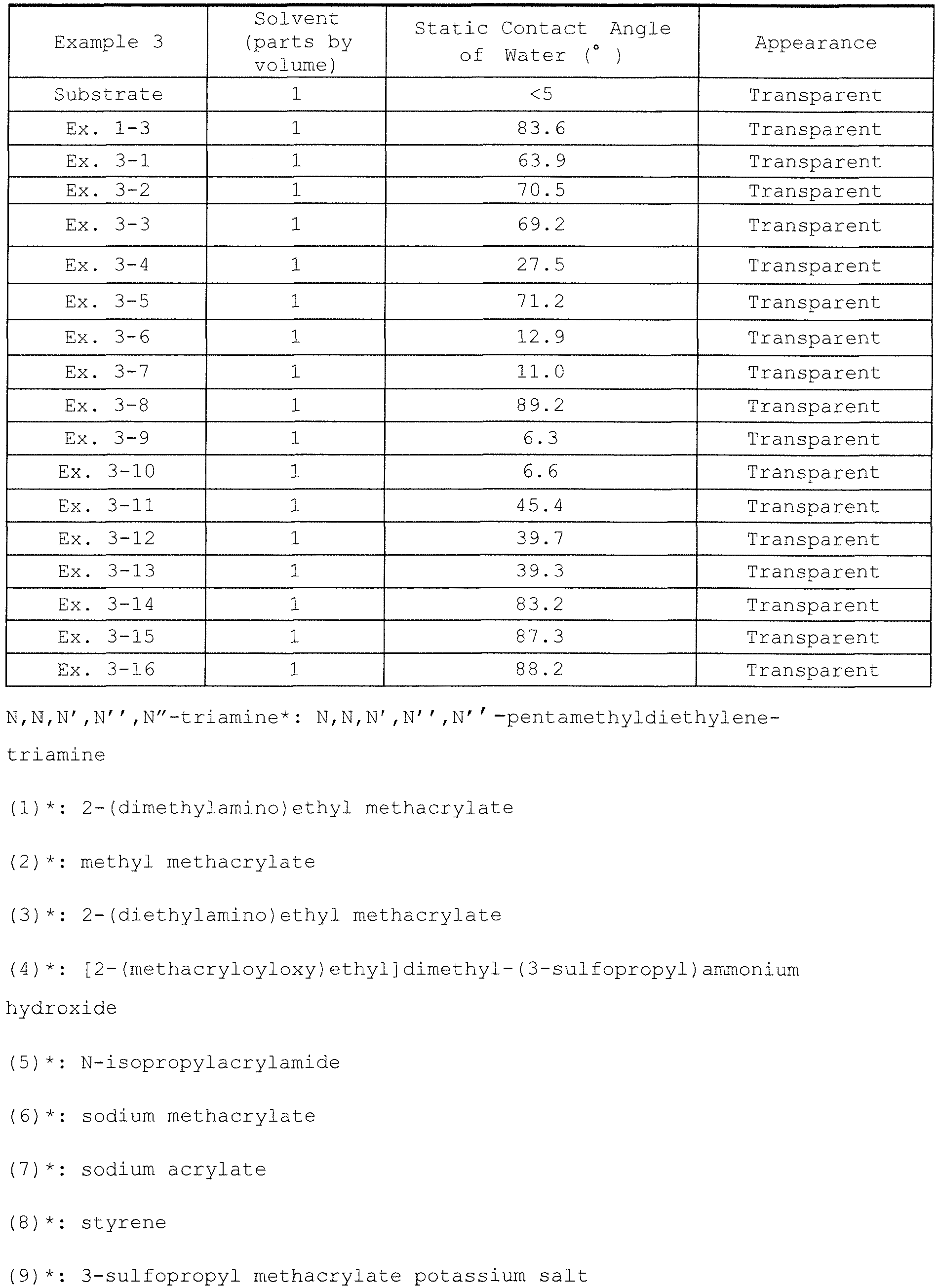

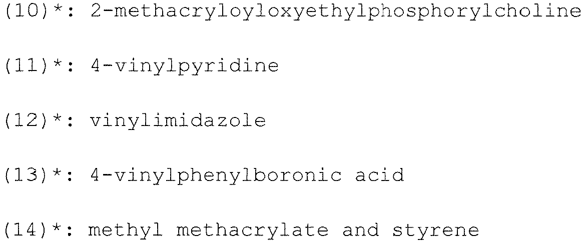

### Example 4

In the examples described here, various substrate materials were used in place of the one (silicon wafer) of Example 1, and the amount of (chloromethyl)phenyl-ethyltrimethoxysilane added was varied as described below to form a polymerization initiator layer under the following conditions (Examples 4-1 to 4-12).

(chloromethyl)phenylethyltrimethoxysilane was added in the same three amounts as in Examples 1-1, 1-2 and 1-3 and described in the following Table 4 to a mixed solution comprising 0.01M HCl aqueous solution (1 part by volume), TEOS (2.8 parts by volume) and EtOH (8 parts by volume), and stirred at room temperature for 24 hours to prepare a precursor solution. This precursor solution was added dropwise onto the surfaces of various substrate materials (acrylic resin, polycarbonate, glass, and copper sheet), then spin-coated (2000 rpm for 10 seconds), and then dried at room temperature for 24 hours to form polymerization initiator layers. A solution having the same composition as in Example 1 was used as the polymerization solution, and a two-hour polymerization was carried out in the polymerization solution.

The results of measurement of the static angle of contact of the polymer brushes with water on the polymerization initiator layer are indicated with their appearances in Table 4.

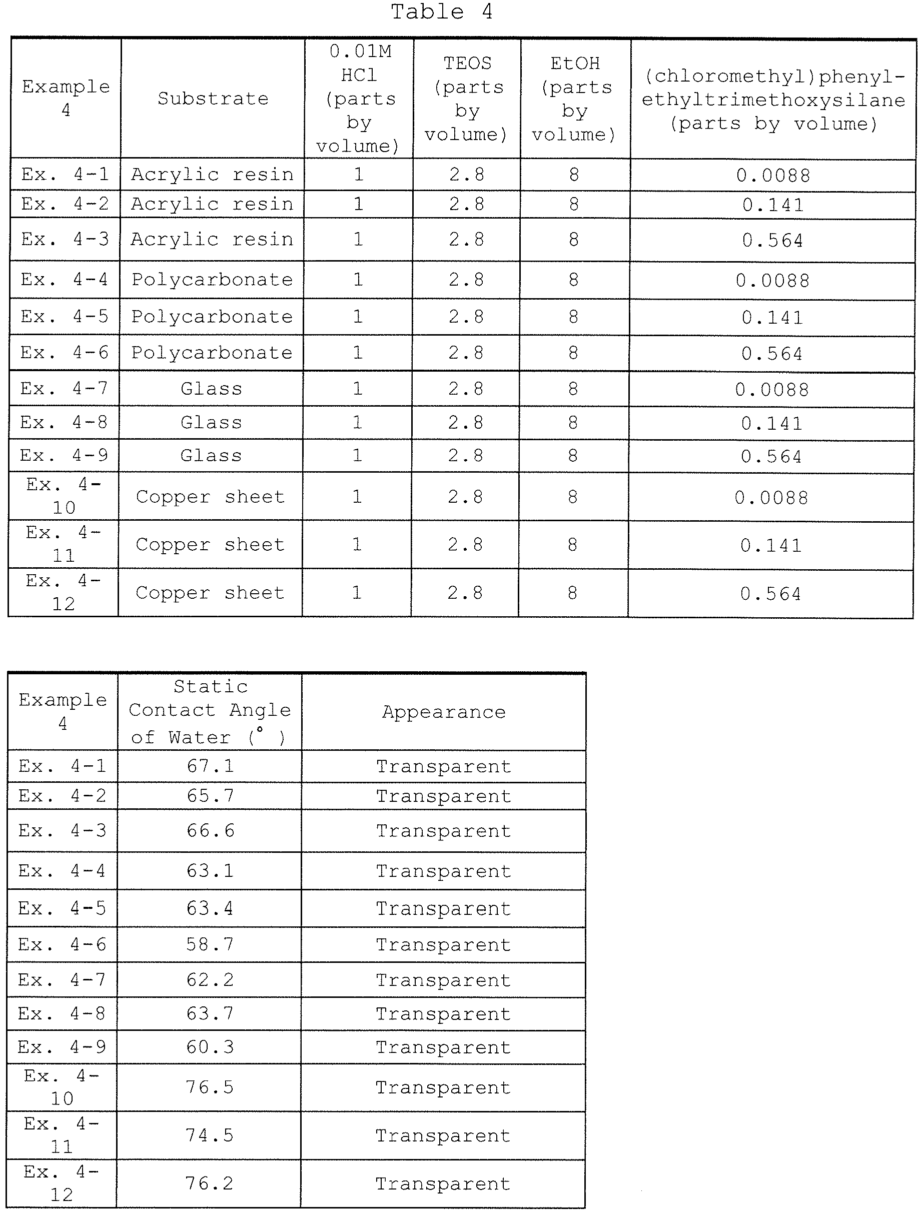

### Example 5

In the examples described here, the stirring time of the mixed solution in Examples 1 to 3 was varied, and the polymerization initiator layer was formed under the following conditions.

(chloromethyl)phenylethyltrimethoxysilane (0.564 parts by volume) was added to a mixed solution comprising 0.01M HCl aqueous solution (1 part by volume), TEOS (2.8 parts by volume) and EtOH (8 parts by volume), and stirred at room temperature for 24 hours, 48 hours, 96 hours (called Examples 5-1, 5-2, 5-3 in order) to prepare a precursor solution. This precursor solution was added dropwise onto a silicon wafer, then spin-coated (2000 rpm for 10 seconds), and then dried at room temperature for 24 hours to form a polymerization initiator layer. A solution having the same composition as in Example 1 was used as the polymerization solution, and a two-hour polymerization was carried out in the polymerization solution.

The results of measurement of the static angle of contact of the polymer brushes with water on the polymerization initiator layer are indicated with their appearances in Table 5.

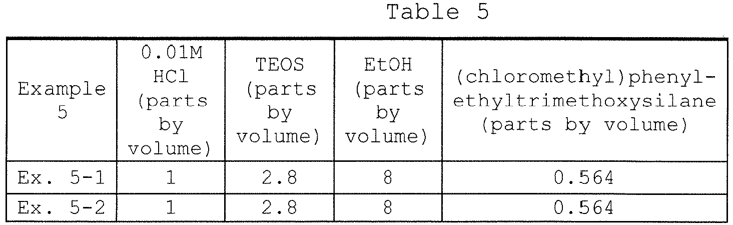

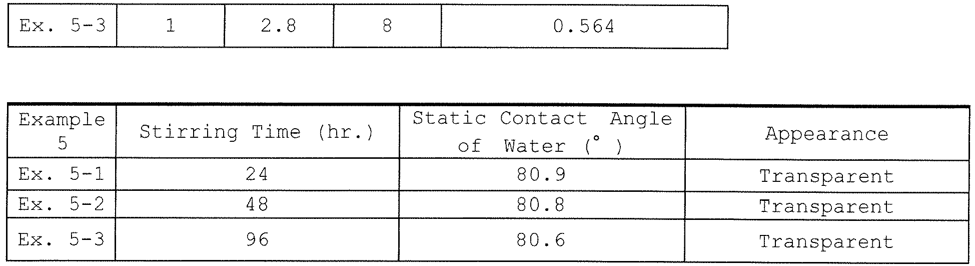

### Comparative Example 1

Three organosilanes shown in Table 6 were used to form polymerization initiator layer (Comp. Ex. 1-1, 1-2, 1-3) .

A glass bottle (1.5 mL) containing an organosilane (20 µl) and various substrate materials (silicon wafer, acrylic resin, polycarbonate, glass, and copper sheet) were placed in a closeable Teflon (registered trademark) container (60 mL), and then heat treated at 100°C for 24 hours thereby preparing a monomolecular film of the polymerization initiator. A solution having the same composition as in Example 1 was used as the polymerization solution, and a 24-hour polymerization was carried out in the polymerization solution.

As a result, it has been found that even with the three organosilanes shown in Table 6, a polymer brush can be formed when the substrate material is a silicon wafer, a glass, and a copper sheet. However, when using an acrylic resin or polycarbonate as the substrate material, its discoloration or deformation was observed as shown in Table 6, and when using (chloromethyl)phenyltrichlorosilane, there was no formation of any polymer brush observed.

**Table 6**

| Comp. Ex. 1 | Initiator | State of the Substrate | Formation of the Polymer Brush |
|---|---|---|---|
| 1-1 | (chloromethyl)phenyltrichlorosilane | Yellowing, and Deformation | Not formed |
| 1-2 | (chloromethyl)phenylethyltrimethoxysilane | Discoloration | Formed |
| 1-3 | (3-trimethoxysilyl)propyl 2-bromo-2-methyl propionate | Discoloration | Formed |

### Comparative Example 2

To form a polymerization initiator layer, 3-(trimethoxysilylpropyl)-2-bromo-2-methylpropionate (0.56 parts by volume) having a 2-bromoisobutyryl group that is a polymerization initiator group was added to a mixed solution comprising 0.01M HCl aqueous solution (1 part by volume), TEOS (2.8 parts by volume) and EtOH (8 parts by volume), and then stirred at room temperature for 24 hours to prepare a precursor solution. This precursor solution was added dropwise onto a silicon wafer, then spin-coated (2000 rpm for 10 seconds), and then dried at room temperature for 24 hours to form a polymerization initiator layer on the surface of a silicon wafer. A solution having the same composition as in Example 1 was used as the polymerization solution, and a 2-hour polymerization was carried out in the polymerization solution.

The state of the obtained substrate material, and whether or not the polymer brush was formed is shown in Table 7. With the initiator used in Comparative Example 2, there was no formation of any polymer brush found.

**Table 7**

| | Initiator | State of the Substrate | Formation of the Polymer Brush |
|---|---|---|---|
| Comp. Ex. 2 | 3-(2-bromoisobutyryloxy)propyltrimethoxysilane | Transparent | Not formed |

### Comparative Example 3

To form a polymerization initiator group, aminopropyltriethoxysilane (2.1 parts by volume) and 2-bromo-isobutyrylamide (1 part by volume) were mixed in hexane, and then stirred in an ice bath for 6 hours. After removal of the resulting white solid by filtration, the solvent was distilled off at reduced pressure to obtain 2-bromo-2-methyl-N-(3-triethoxysilyl)propyl)propanamide.

The resultant 2-bromo-2-methyl-N-(3-triethoxysilyl)propyl)propanamide (0.56 parts by volume) was added to a mixed solution comprising 0.01M HCl aqueous solution (1 part by volume), TEOS (2.8 parts by volume) and EtOH (8 parts by volume), and then stirred at room temperature for 24 hours to prepare a precursor solution. This precursor solution was added dropwise onto a silicon wafer, then spin-coated (2000 rpm for 10 seconds), and then dried at room temperature for 24 hours to form a polymerization initiator layer on the surface of the silicon wafer.

The obtained silicon wafer having the polymerization initiator layer formed on it was dipped and polymerized in a polymerization solution having the same composition as in Example 1 for 2 hours to form a polymer brush on the surface of the substrate material.

The state of the obtained substrate material, and whether or not the polymer brush was formed is shown in Table 8. With the initiator used in Comparative Example 3, there was no formation of any polymer brush observed, or the polymerization initiator layer remained partly dissolved (as shown by "dissolved" in Table 8).

**Table 8**

| | Initiator | State of the Substrate | Formation of the Polymer Brush |
|---|---|---|---|
| Comp. Ex. 3 | 3-(2-bromoisobutyrylamino)propyl-triethoxysilane | Transparent | Not formed, or remaining dissolved |

From relative estimations of the surface features of samples prepared in the aforesaid Examples 1 to 5 and Comparative Examples 1 to 3, it has been found that Examples 1 to 5 wherein the polymerization initiator layer is formed by use of the precursor solution prepared by addition of the metal alkoxide to the organosilane make the uniformity of the resulting initiator layer higher than Comparative Examples 1 to 3 wherein a monomolecular film that provides polymerization initiator layer is formed by sole use of the organosilane without detrimental to the performance and design capability of the substrate material.

It has also been found that the polymer brush can be formed on the polymerization initiator layer containing the polymerization initiator prepared in Example 1, and 2 whereas, in Comparative Examples 1 to 3, it is difficult to form a polymer brush or, alternatively, the substrate material may undergo discoloration and deformation.

When a monomolecular film that provides polymerization initiator layer is formed by sole use of the organosilane, it is difficult to treat a surface having large roughness or a surface of a substrate material having low activity as generally known in the art. Indeed, as can also be seen from the results of Comparative Example 1, some polymer brush may be formed on a smooth substrate material having small roughness, such as glass or silicon, yet other substrate materials undergo discoloration or deformation or, alternatively, they are unable to yield any polymer brush.

Further, as can also be seen from Examples 1, 2, 4 and 5, the treatment technology of the invention has enhanced versatility in that uniform polymerization initiator layer can be formed with no need of special pretreatment or treatment conditions for substrate materials and without detrimental to the performance and design capability of substrate materials. The precursor solution of the invention is also so stable and has so a long pot life (it can be stored in a refrigerator over at least one month) that it is possible to easily form uniform polymerization initiator layer that remains stable over an extended period of time.

Further, as can also be seen from Example 3, uniform polymerization initiator layer can be formed with ease on a variety of substrate materials by the treatment technology disclosed herein so that a polymer brush can be formed from the surface of said polymerization initiator layer in the air, and said polymerization initiator layer and said polymer brush can be applied by brushing in the air so that large areas can be treated, too. In addition, the surface wettability of the substrate material may be controlled as desired, although depending on the monomer species used.

Furthermore, as can also be seen from Comparative Examples 2 and 3, ester bonds or amide bonds are cleft by way of hydrolysis to cause the polymerization initiator group to be not contained in the polymerization initiator layer or the polymer initiator layer to be dissolved during polymerization, resulting in a failure to form any polymer brush or no or little formation of any polymer brush.

### Example 6

In the example described here, a bar coater made by Cotec Co., Ltd. was used to coat and dry a precursor solution by means of a bar coating process into a polymerization initiator layer.

A (1 mm thick, 500 mm wide, 500 mm long) glass and a (1 mm thick, 500 mm wide, 500 mm long) polycarbonate were used as the substrate material.

The polymerization initiator solution of Examples 1 to 3 was used for the precursor solution while diluted five-fold with ethanol. This precursor solution was added dropwise onto the substrate material, then coated by means of a bar coater, and then dried at room temperature for 24 hours to form polymerization initiator layer (having a thickness of 240 nm).

As a result of observation of the obtained polymerization initiator, it has been found that the polymerization initiator layer formed by the bar coater process is enhanced in terms of transparency irrespective of the dilution ratio of the precursor solution.

The results of measurement of the static angle of contact of the polymer brushes with water on the obtained polymerization initiator layer and their appearances are shown in Table 9.

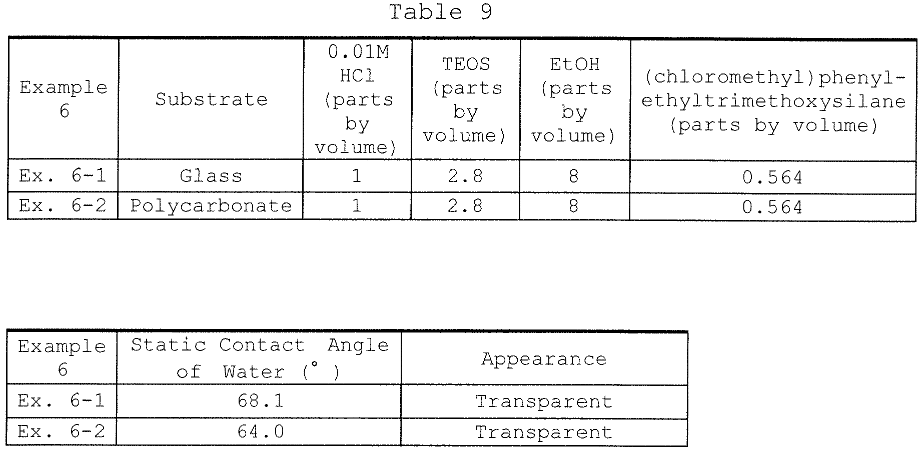

### Example 7

In the example described herein, a roll-to-roll type film-making system was used to coat a precursor solution in the gravure mode for formation of polymerization initiator layer.

A roll film in which a polyester layer was formed on a 125 µm thick, 400 mm wide, 100 m long) polyethylene terephthalate (PET) film excelling in flexibility as an easy-to-bond layer was used as a substrate material.

The polymerization initiator layer precursor solution of Examples 1 to 3, diluted 5-fold and 20-fold with isopropanol, was used as a precursor solution. This precursor solution was coated onto the film, and then dried at 80°C for 1 minute to form a polymerization initiator layer (having a thickness of 59 nm).

As a result of observation of the obtained polymerization initiator layer, it has been found that the polymerization initiator layer formed on the surface of the PET film excels in transparency irrespective of the dilution ratio of the precursor solution, and the occurrence of cracks or the like has not been confirmed.

### Example 8

In the example described here, a (297 mm by 210 mm) piece cut out of the substrate material covered with the polymerization initiator layer obtained in Example 7 was used, as mentioned below, to prepare a polymer brush.

A solution having the same composition as in Example 1 was used as a polymerization solution, and the cut piece was dipped in the polymerization solution for 2 hours to form a polymer brush on its surface.

As a result of observation of the obtained polymer brush, it has been found that the transparency of the PET film is kept intact with no confirmed occurrence of cracks or the like.

### Example 9

In the example described here, the catalyst carrying function of the polymer brush was used to fix or graft a catalyst onto the surface of a substrate material and apply electroless copper plating thereto to form a plating layer thereon under the following conditions.

The PET film of Example 8 provided with a polymer brush was used as the substrate material that was then dipped in an acidic solution of 1.4 mM palladium (II) chloride for 2 hours to carry out adsorption of the palladium catalyst onto the polymer brush for the fixation of said catalyst.

Then, Thru-Cup (registered trademark) PEA made by Uyemura Co., Ltd. was used; an electroless copper plating aqueous solution comprising ion exchanged water (60 parts by volume), Thru-Cup PEA-40-M (10 parts by volume), Thru-Cup PEA-40-B (6 parts by volume), Thru-Cup PEA-40-D (3.5 parts by volume), and a 37% formaldehyde solution (2.3 parts by volume) was prepared, and the PET film, to which said palladium catalyst was fixed, was dipped in said aqueous solution for 1 hour to apply electroless copper plating treatment thereto.

It has consequently been confirmed that the copper plating layer adheres firmly to the polymer brush-side surface of the PET film.

### Industrial Availability

According to the invention, it is possible to form the polymer brush having enhanced adherence on the surface of a variety of large-area substrate materials thereby giving the surface of the substrate material a variety of functions such as water/oil repellency, superhydrophilicity, slippage capability, droplet removal capability, fingerprint resistance, antifogging capability, slidability, corrosion resistance, and antibacterial activity.

The present invention provides a method of achieving the formation of a polymer brush on a variety of large-area substrate materials, which has been considered difficult so far in the art. By the formation of the polymer brush by way of polymer initiator layer formed by the sol-gel process, for instance, it is possible to provide a novel, more effective surface treatment technology capable of imparting functions to the surface of a substrate material, inclusive of improvements in the capabilities of removing raindrops out of glasses for automobiles and building materials, securing visibility by impartment of antifogging features, preventing contaminations, controlling water flows through µ-TASs, biochips or the like, controlling micro-water droplets (mist) through water-soluble ink jetting nozzles or the like, preventing corrosion of metals/wood materials, improving the releasability of moldings out of nanoimprinting molds, and preventing adhesion of fingerprints on touch panel displays, etc.

## Claims

1. A substrate for formation of a polymer brush, comprising a substrate material, and a polymerization initiator layer formed on a surface of said substrate material, **characterized in that** said polymerization initiator layer contains a hydrolysate/condensation polymer of an organosilane and a metal alkoxide, wherein said organo-silane is a polymerization initiator group-containing organosilane having the following formula (1):
X-R¹-(Ph)ₖ-(R²)ₘ-Si-R³ₙR⁴₃₋ₙ ... (I)
where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.

2. The substrate for formation of the polymer brush according to claim 1, **characterized in that** said organosilane further contains a second organosilane having the following formula (II):
R⁵-(Ph)ₚ-(R⁶)_{q}-Si-R⁷ᵣR⁸₃₋ᵣ ... (II)
where R⁵ stands for a hydrogen atom or an alkyl group having 1 to 4 carbon atoms, Ph stands for a phenylene group, R⁶ stands for a C1 to C10 alkylene group optionally bound via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.

3. The substrate for formation of the polymer brush according to claim 1 or 2, **characterized in that** said polymerization initiator layer has a thickness of 10 to 20000 nm.

4. The substrate for formation of the polymer brush according to any one of claims 1 to 3, wherein said substrate material is formed of a resin.

5. The substrate for formation of the polymer brush according to claim 4, wherein said resin is at least one selected from the group consisting of a polyethylene terephthalate resin, a polycarbonate resin, an acrylic resin, a silicone resin, and an ABS resin.

6. A precursor solution for producing the substrate for formation of the polymer brush according to any one of claims 1 to 5, **characterized by** containing an organic solvent, water, a sol-gel catalyst, a metal alkoxide, and a polymerization initiator group-containing organosilane, wherein said organosilane has the following formula (I):
X-R¹-(Ph)ₖ-(R²)ₘ-Si-R³ₙR⁴₃₋ₙ ... (I)
where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.

7. The precursor solution according to claim 6, **characterized by** further containing a second organosilane having the following formula (II):
R⁵-(Ph)ₚ-(R⁶)_{q}-Si-R⁷ᵣR⁸₃₋ᵣ ... (II)
where R⁵ stands for a hydrogen atom or an alkyl group having 1 to 4 carbon atoms, Ph stands for a phenylene group, R⁶ stands for a C1 to C10 alkylene group optionally bound via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.

8. A substrate material, which is provided with the polymer brush in which monomers are polymerized with said polymerization initiator groups of the substrate for formation of the polymer brush according to any one of Claims 1 to 5 as starting points.

9. The substrate material provided with the polymer brush according to claim 8, wherein plating layers are formed on a surface of said substrate material.

10. A process of producing a substrate for formation of a polymer brush, wherein a precursor solution comprising an organic solvent, water, a sol-gel catalyst, a metal alkoxide, and a polymerization initiator group-containing organosilane is coated onto a substrate material, and a polymerization initiator layer is formed by a sol-gel process on said substrate material, **characterized in that** said organosilane has the following formula (I):
X-R¹-(Ph)ₖ-(R²)ₘ-Si-R³ₙR⁴₃₋ₙ ... (I)
where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.

11. The process of producing the substrate for formation of the polymer brush according to claim 10, **characterized in that** said precursor solution further contains a second organosilane having the following formula (II):
R⁵-(Ph)ₚ-(R⁶)_{q}-Si-R⁷ᵣR⁸₃₋ᵣ ... (II)
where R⁵ stands for a hydrogen atom or an alkyl group having 1 to 4 carbon atoms, Ph stands for a phenylene group, R⁶ stands for a C1 to C10 alkylene group optionally bound via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.

12. A process of producing a polymer brush comprising:
a step of coating a precursor solution comprising an organic solvent, water, a sol-gel catalyst, a metal alkoxide, and a polymerization initiator group-containing organosilane on a substrate material, and forming a polymerization initiator layer having a thickness of 10 to 20000 nm by a sol-gel process on said substrate material thereby obtaining a substrate for formation of a polymer brush, and
a polymer brush growth step of polymerizing a monomer with the polymerization initiator group of said substrate for formation of a polymer brush as starting points for growth of the polymer brush, **characterized in that** said organosilane has the following formula (I):
X-R¹-(Ph)ₖ-(R²)ₘ-Si-R³ₙR⁴₃₋ₙ ... (I)
where X stands for a halogen atom, R¹ stands for an alkylene group having 1 to 3 carbon atoms, Ph stands for a phenylene group, R² stands for a C1 to C10 alkylene group optionally bound via an oxygen atom, R³ stands for an alkoxy having 1 to 3 carbon atoms or chloro group, R⁴ stands for an alkyl group having 1 to 6 carbon atoms, k is 0 or 1, m is 0 or 1, and n is 1, 2 or 3.

13. The process of producing the polymer brush according to Claim 12, **characterized in that** said precursor solution further contains a second organosilane having the following formula (II):
R⁵-(Ph)ₚ-(R⁶)_{q}-Si-R⁷ᵣR⁸₃₋ᵣ ... (II)
where R⁵ stands for a hydrogen atom or an alkyl group having 1 to 4 carbon atoms, Ph stands for a phenylene group, R⁶ stands for a C1 to C10 alkylene group optionally bound via an oxygen atom, R⁷ stands for an alkoxy having 1 to 3 carbon atoms or chloro group, R⁸ stands for an alkyl group having 1 to 6 carbon atoms, p is 0 or 1, q is 0 or 1, and r is 1, 2 or 3.

14. A process of forming a plating layer on a polymer brush side surface of the substrate material, wherein after forming the polymer brush by the process according to claim 12 or 13 on the surface of the substrate material, a plating catalyst is fixed to the polymer brush formed on said substrate material, followed by application of electroless plating.

## Patentansprüche

1. Ein Substrat zur Bildung einer Polymerbürste, umfassend ein Substratmaterial und eine Polymerisationsinitiatorschicht, die auf einer Oberfläche des Substratmaterials gebildet ist, **dadurch gekennzeichnet, dass** die Polymerisationsinitiatorschicht ein Hydrolysat/Kondensationspolymer eines Organosilans und eines Metallalkoxids enthält, wobei das Organosilan ein Polymerisationsinitiatorgruppen enthaltendes Organosilan mit der folgenden Formel (1) ist:
X-R¹-(Ph)ₖ-(R²)ₘ-Si-R³ₙR⁴₃₋ₙ ... (I)
wobei X für ein Halogenatom steht, R¹ für eine Alkylengruppe mit 1 bis 3 Kohlenstoffatomen steht, Ph für eine Phenylengruppe steht, R² für eine C1- bis C10-Alkylengruppe, gegebenenfalls verbunden über ein Sauerstoffatom, steht, R³ für ein Alkoxy mit 1 bis 3 Kohlenstoffatomen oder eine Chlorgruppe steht, R⁴ für eine Alkylgruppe mit 1 bis 6 Kohlenstoffatomen steht, k gleich 0 oder 1 ist, m gleich 0 oder 1 ist, und n gleich 1, 2 oder 3 ist.

2. Das Substrat zur Bildung der Polymerbürste nach Anspruch 1, **dadurch gekennzeichnet, dass** das Organosilan ferner ein zweites Organosilan mit der folgenden Formel (II) enthält:
R⁵-(Ph)ₚ-(R⁶)_{q}-Si-R⁷ᵣR⁸₃₋ᵣ ... (II)
wobei R⁵ für ein Wasserstoffatom oder eine Alkylgruppe mit 1 bis 4 Kohlenstoffatomen steht, Ph für eine Phenylengruppe steht, R⁶ für eine C1- bis C10-Alkylengruppe, gegebenenfalls verbunden über ein Sauerstoffatom, steht, R⁷ für ein Alkoxy mit 1 bis 3 Kohlenstoffatomen oder eine Chlorgruppe steht, R⁸ für eine Alkylgruppe mit 1 bis 6 Kohlenstoffatomen steht, p gleich 0 oder 1 ist, q gleich 0 oder 1 ist, und r gleich 1, 2 oder 3 ist.

3. Das Substrat zur Bildung der Polymerbürste nach Anspruch 1 oder 2, **dadurch gekennzeichnet, dass** die Polymerisationsinitiatorschicht eine Dicke von 10 bis 20000 nm aufweist.

4. Das Substrat zur Bildung der Polymerbürste nach einem der Ansprüche 1 bis 3, wobei das Substratmaterial aus einem Harz gebildet ist.

5. Das Substrat zur Bildung der Polymerbürste nach Anspruch 4, wobei das Harz mindestens eines ist, ausgewählt aus der Gruppe bestehend aus einem Polyethylenterephthalatharz, einem Polycarbonatharz, einem Acrylharz, einem Silikonharz und einem ABS-Harz.

6. Eine Vorläuferlösung zum Herstellen des Substrats für die Bildung der Polymerbürste nach einem der Ansprüche 1 bis 5, **dadurch gekennzeichnet, dass** sie ein organisches Lösungsmittel, Wasser, einen Sol-Gel-Katalysator, ein Metallalkoxid und ein Polymerisationsinitiatorgruppen enthaltendes Organosilan enthält, wobei das Organosilan die folgende Formel (I) aufweist:
X-R¹-(Ph)ₖ-(R²)ₘ-Si-R³ₙR⁴₃₋ₙ ... (I)
wobei X für ein Halogenatom steht, R¹ für eine Alkylengruppe mit 1 bis 3 Kohlenstoffatomen steht, Ph für eine Phenylengruppe steht, R² für eine C1- bis C10-Alkylengruppe, gegebenenfalls verbunden über ein Sauerstoffatom, steht, R³ für ein Alkoxy mit 1 bis 3 Kohlenstoffatomen oder eine Chlorgruppe steht, R⁴ für eine Alkylgruppe mit 1 bis 6 Kohlenstoffatomen steht, k gleich 0 oder 1 ist, m gleich 0 oder 1 ist, und n gleich 1, 2 oder 3 ist.

7. Die Vorläuferlösung nach Anspruch 6, **dadurch gekennzeichnet, dass** sie ferner ein zweites Organosilan mit der folgenden Formel (II) enthält:
R⁵-(Ph)ₚ-(R^{e})_{q}-Si-R⁷ᵣR⁸₃₋ᵣ ... (II)
wobei R⁵ für ein Wasserstoffatom oder eine Alkylgruppe mit 1 bis 4 Kohlenstoffatomen steht, Ph für eine Phenylengruppe steht, R⁶ für eine C1- bis C10-Alkylengruppe, gegebenenfalls verbunden über ein Sauerstoffatom, steht, R⁷ für ein Alkoxy mit 1 bis 3 Kohlenstoffatomen oder eine Chlorgruppe steht, R⁸ für eine Alkylgruppe mit 1 bis 6 Kohlenstoffatomen steht, p gleich 0 oder 1 ist, q gleich 0 oder 1 ist und r gleich 1, 2 oder 3 ist.

8. Ein Substratmaterial, das mit der Polymerbürste bereitgestellt wird, in der Monomere mit den Polymerisationsinitiatorgruppen des Substrats zur Bildung der Polymerbürste nach einem der Ansprüche 1 bis 5 als Ausgangspunkte polymerisiert werden.

9. Das Substratmaterial, das mit der Polymerbürste nach Anspruch 8 bereitgestellt wird, wobei Plattierungsschichten auf einer Oberfläche des Substratmaterials gebildet werden.

10. Ein Verfahren zum Herstellen eines Substrats zur Bildung einer Polymerbürste, wobei eine Vorläuferlösung, umfassend ein organisches Lösungsmittel, Wasser, einen Sol-Gel-Katalysator, ein Metallalkoxid und ein Polymerisationsinitiatorgruppen enthaltendes Organosilan auf ein Substratmaterial aufgetragen wird und eine Polymerisationsinitiatorschicht durch ein Sol-Gel-Verfahren auf dem Substratmaterial gebildet wird, **dadurch gekennzeichnet, dass** das Organosilan die folgende Formel (I) aufweist:
X-R¹-(Ph)ₖ-(R²)ₘ-Si-R³ₙR⁴₃₋ₙ ... (I)
wobei X für ein Halogenatom steht, R¹ für eine Alkylengruppe mit 1 bis 3 Kohlenstoffatomen steht, Ph für eine Phenylengruppe steht, R² für eine C1- bis C10-Alkylengruppe, gegebenenfalls verbunden über ein Sauerstoffatom, steht, R³ für ein Alkoxy mit 1 bis 3 Kohlenstoffatomen oder eine Chlorgruppesteht, R⁴ für eine Alkylgruppe mit 1 bis 6 Kohlenstoffatomen steht, k gleich 0 oder 1 ist, m gleich 0 oder 1 ist und n gleich 1, 2 oder 3 ist.

11. Das Verfahren zum Herstellen des Substrats für die Bildung der Polymerbürste nach Anspruch 10, **dadurch gekennzeichnet, dass** die Vorläuferlösung ferner ein zweites Organosilan mit der folgenden Formel (II) enthält:
R⁵-(Ph)ₚ-(R^{e})_{q}-Si-R⁷ᵣR⁸₃₋ᵣ ... (II)
wobei R⁵ für ein Wasserstoffatom oder eine Alkylgruppe mit 1 bis 4 Kohlenstoffatomen steht, Ph für eine Phenylengruppe steht, R⁶ für eine C1- bis C10-Alkylengruppe, gegebenenfalls verbunden über ein Sauerstoffatom, steht, R⁷ für ein Alkoxy mit 1 bis 3 Kohlenstoffatomen oder eine Chlorgruppe steht, R⁸ für eine Alkylgruppe mit 1 bis 6 Kohlenstoffatomen steht, p gleich 0 oder 1 ist, q gleich 0 oder 1 ist und r gleich 1, 2 oder 3 ist.

12. Ein Verfahren zum Herstellen einer Polymerbürste, umfassend:
einen Schritt des Auftragens einer Vorläuferlösung, umfassend ein organisches Lösungsmittel, Wasser, einen Sol-Gel-Katalysator, ein Metallalkoxid und ein Polymerisationsinitiatorgruppen enthaltendes Organosilan auf ein Substratmaterial, und Bilden einer Polymerisationsinitiatorschicht mit einer Dicke von 10 bis 20000 nm durch ein Sol-Gel-Verfahren auf dem Substratmaterial, wodurch ein Substrat zur Bildung einer Polymerbürste erhalten wird, und
einen Polymerbürstenwachstumsschritt des Polymerisierens eines Monomers mit der Polymerisationsinitiatorgruppe des Substrats zur Bildung einer Polymerbürste als Ausgangspunkte für das Wachstum der Polymerbürste, **dadurch gekennzeichnet, dass** das Organosilan die folgende Formel (I) aufweist:
X-R¹-(Ph)ₖ-(R²)ₘ-Si-R³ₙR⁴₃₋ₙ ... (I)
wobei X für ein Halogenatom steht, R¹ für eine Alkylengruppe mit 1 bis 3 Kohlenstoffatomen steht, Ph für eine Phenylengruppe steht, R² für eine C1- bis C10-Alkylengruppe, gegebenenfalls verbunden über ein Sauerstoffatom, steht, R³ für ein Alkoxy mit 1 bis 3 Kohlenstoffatomen oder eine Chlorgruppe steht, R⁴ für eine Alkylgruppe mit 1 bis 6 Kohlenstoffatomen steht, k gleich 0 oder 1 ist, m gleich 0 oder 1 ist und n gleich 1, 2 oder 3 ist.

13. Das Verfahren zum Herstellen der Polymerbürste nach Anspruch 12, **dadurch gekennzeichnet, dass** die Vorläuferlösung ferner ein zweites Organosilan mit der folgenden Formel (II) enthält:
R⁵-(Ph)ₚ-(R^{e})_{q}-Si-R⁷ᵣR⁸₃₋ᵣ ... (II)
wobei R⁵ für ein Wasserstoffatom oder eine Alkylgruppe mit 1 bis 4 Kohlenstoffatomen steht, Ph für eine Phenylengruppe steht, R⁶ für eine C1- bis C10-Alkylengruppe, gegebenenfalls verbunden über ein Sauerstoffatom, steht, R⁷ für ein Alkoxy mit 1 bis 3 Kohlenstoffatomen oder eine Chlorgruppe steht, R⁸ für eine Alkylgruppe mit 1 bis 6 Kohlenstoffatomen steht, p gleich 0 oder 1 ist, q gleich 0 oder 1 ist und r gleich 1, 2 oder 3 ist.

14. Ein Verfahren zum Bilden einer Plattierungsschicht auf einer Oberfläche der Polymerbürstenseite des Substratmaterials, wobei nach dem Bilden der Polymerbürste durch das Verfahren nach Anspruch 12 oder 13 auf der Oberfläche des Substratmaterials ein Plattierungskatalysator an der Polymerbürste, die auf dem Substratmaterial gebildet ist, fixiert wird, gefolgt von der Anwendung von stromlosem Plattieren.

## Revendications

1. Substrat pour formation d'une brosse polymère, comprenant un matériau de substrat, et une couche d'initiateur de polymérisation formée sur une surface dudit matériau de substrat, **caractérisé en ce que** ladite couche d'initiateur de polymérisation contient un hydrolysat/ polymère de condensation d'un organosilane et un alcoolate de métal, dans lequel ledit organo-silane est un organosilane contenant un groupe d'initiateur de polymérisation ayant la formule (I) suivante :
X-R¹-(Ph)ₖ-(R²)ₘ-Si-R³ₙR⁴₃₋ₙ ... (I)
où X représente un atome d'halogène, R¹ représente un groupe alkylène ayant de 1 à 3 atomes de carbone, Ph représente un groupe phénylène, R² représente un groupe alkylène en C1 à C10 éventuellement lié via un atome d'oxygène, R³ représente un groupe alcoxy ayant de 1 à 3 atomes de carbone ou un groupe chloro, R⁴ représente un groupe alkyle ayant de 1 à 6 atomes de carbone, k est égal à 0 ou 1, m est égal à 0 ou 1, et n est égal à 1, 2 ou 3.

2. Substrat pour la formation de la brosse polymère selon la revendication 1, **caractérisé en ce que** ledit organosilane contient de plus un second organosilane ayant la formule (II) suivante :
R⁵-(Ph)ₚ-(R⁶)_{q}-Si-R⁷ᵣR⁸₃₋ᵣ ... (II)
où R⁵ représente un atome d'hydrogène ou un groupe alkyle ayant de 1 à 4 atomes de carbone, Ph représente un groupe phénylène, R⁶ représente un groupe alkylène en C1 à C10 éventuellement lié via un atome d'oxygène, R⁷ représente un groupe alcoxy ayant de 1 à 3 atomes de carbone ou un groupe chloro, R⁸ représente un groupe alkyle ayant de 1 à 6 atomes de carbone, p est égal à 0 ou 1, q est égal à 0 ou 1, et r est égal à 1, 2 ou 3.

3. Substrat pour formation de la brosse polymère selon la revendication 1 ou 2, **caractérisé en ce que** ladite couche d'initiateur de polymérisation présente une épaisseur de 10 à 20 000 nm.

4. Substrat pour formation de la brosse polymère selon l'une quelconque des revendications 1 à 3, dans lequel ledit matériau de substrat est constitué d'une résine.

5. Substrat pour formation de la brosse polymère selon la revendication 4, dans lequel ladite résine est au moins une choisie dans le groupe consistant en une résine de poly(éthylène téréphtalate), une résine de polycarbonate, une résine acrylique, une résine de silicone, et une résine ABS.

6. Solution de précurseur pour produire le substrat pour formation de la brosse polymère selon l'une quelconque des revendications 1 à 5, **caractérisée en ce qu'**elle contient un solvant organique, de l'eau, un catalyseur sol-gel, un alcoolate de métal, et un organosilane contenant un groupe d'initiateur de polymérisation, dans laquelle ledit organosilane présente la formule (I) suivante :
X-R¹-(Ph)ₖ-(R²)ₘ-Si-R³ₙR⁴₃₋ₙ ... (I)
où X représente un atome d'halogène, R¹ représente un groupe alkylène ayant de 1 à 3 atomes de carbone, Ph représente un groupe phénylène, R² représente un groupe alkylène en C1 à C10 éventuellement lié via un atome d'oxygène, R³ représente un groupe alcoxy ayant de 1 à 3 atomes de carbone ou un groupe chloro, R⁴ représente un groupe alkyle ayant de 1 à 6 atomes de carbone, k est égal à 0 ou 1, m est égal à 0 ou 1, et n est égal à 1, 2 ou 3.

7. Solution de précurseur selon la revendication 6, **caractérisée en ce qu'**elle contient de plus un second organosilane ayant la formule (II) suivante :
R⁵-(Ph)ₚ-(R⁶)_{q}-Si-R⁷ᵣR⁸₃₋ᵣ ... (II)
où R⁵ représente un atome d'hydrogène ou un groupe alkyle ayant de 1 à 4 atomes de carbone, Ph représente un groupe phénylène, R⁶ représente un groupe alkylène en C1 à C10 éventuellement lié via un atome d'oxygène, R⁷ représente un groupe alcoxy ayant de 1 à 3 atomes de carbone ou un groupe chloro, R⁸ représente un groupe alkyle ayant de 1 à 6 atomes de carbone, p est égal à 0 ou 1, q est égal à 0 ou 1, et r est égal à 1, 2 ou 3.

8. Matériau de substrat, qui est muni de la brosse polymère dans lequel des monomères sont polymérisés avec lesdits groupes d'initiateur de polymérisation du substrat pour formation de la brosse polymère selon l'une quelconque des revendications 1 à 5 comme points de départ.

9. Matériau de substrat muni de la brosse polymère selon la revendication 8, dans lequel des couches de placage sont formées sur une surface dudit matériau de substrat.

10. Procédé de production d'un substrat pour formation d'une brosse polymère, dans lequel une solution de précurseur comprenant un solvant organique, de l'eau, un catalyseur sol-gel, un alcoolate de métal, et un organosilane contenant un groupe d'initiateur de polymérisation est déposée sur un matériau de substrat, et une couche d'initiateur de polymérisation est formée par un procédé sol-gel sur ledit matériau de substrat, **caractérisé en ce que** ledit organosilane présente la formule (I) suivante :
X-R¹-(Ph)ₖ-(R²)ₘ-Si-R³ₙR⁴₃₋ₙ ... (I)
où X représente un atome d'halogène, R¹ représente un groupe alkylène ayant de 1 à 3 atomes de carbone, Ph représente un groupe phénylène, R² représente un groupe alkylène en C1 à C10 éventuellement lié via un atome d'oxygène, R³ représente un groupe alcoxy ayant de 1 à 3 atomes de carbone ou un groupe chloro, R⁴ représente un groupe alkyle ayant de 1 à 6 atomes de carbone, k est égal à 0 ou 1, m est égal à 0 ou 1, et n est égal à 1, 2 ou 3.

11. Procédé de production du substrat pour formation de la brosse polymère selon la revendication 10, **caractérisé en ce que** ladite solution de précurseur contient de plus un second organosilane ayant la formule (II) suivante :
R⁵-(Ph)ₚ-(R⁶)_{q}-Si-R⁷ᵣR⁸₃₋ᵣ ... (II)
où R⁵ représente un atome d'hydrogène ou un groupe alkyle ayant de 1 à 4 atomes de carbone, Ph représente un groupe phénylène, R⁶ représente un groupe alkylène en C1 à C10 éventuellement lié via un atome d'oxygène, R⁷ représente un groupe alcoxy ayant de 1 à 3 atomes de carbone ou un groupe chloro, R⁸ représente un groupe alkyle ayant de 1 à 6 atomes de carbone, p est égal à 0 ou 1, q est égal à 0 ou 1, et r est égal à 1, 2 ou 3.

12. Procédé de production d'une brosse polymère comprenant :
une étape de dépôt d'une solution de précurseur comprenant un solvant organique, de l'eau, un catalyseur sol-gel, un alcoolate de métal, et un organosilane contenant un groupe d'initiateur de polymérisation sur un matériau de substrat, et de formation d'une couche d'initiateur de polymérisation ayant une épaisseur de 10 à 20 000 nm par un procédé sol-gel sur ledit matériau de substrat obtenant par-là un substrat pour formation d'une brosse polymère, et
une étape de croissance de brosse polymère polymérisant un monomère avec le groupe d'initiateur de polymérisation dudit substrat pour formation d'une brosse polymère comme points de départ pour la croissance de la brosse polymère, **caractérisé en ce que** ledit organosilane présente la formule (I) suivante :
X-R¹-(Ph)ₖ-(R²)ₘ-Si-R³ₙR⁴₃₋ₙ ... (I)
où X représente un atome d'halogène, R¹ représente un groupe alkylène ayant de 1 à 3 atomes de carbone, Ph représente un groupe phénylène, R² représente un groupe alkylène en C1 à C10 éventuellement lié via un atome d'oxygène, R³ représente un groupe alcoxy ayant de 1 à 3 atomes de carbone ou un groupe chloro, R⁴ représente un groupe alkyle ayant de 1 à 6 atomes de carbone, k est égal à 0 ou 1, m est égal à 0 ou 1, et n est égal à 1, 2 ou 3.

13. Procédé de production de la brosse polymère selon la revendication 12, **caractérisé en ce que** ladite solution de précurseur contient de plus un second organosilane ayant la formule (II) suivante :
R⁵-(Ph)ₚ-(R⁶)_{q}-Si-R⁷ᵣR⁸₃₋ᵣ ... (II)
où R⁵ représente un atome d'hydrogène ou un groupe alkyle ayant de 1 à 4 atomes de carbone, Ph représente un groupe phénylène, R⁶ représente un groupe alkylène en C1 à C10 éventuellement lié via un atome d'oxygène, R⁷ représente un groupe alcoxy ayant de 1 à 3 atomes de carbone ou un groupe chloro, R⁸ représente un groupe alkyle ayant de 1 à 6 atomes de carbone, p est égal à 0 ou 1, q est égal à 0 ou 1, et r est égal à 1, 2 ou 3.

14. Procédé de formation d'une couche de placage sur une surface côté brosse polymère du matériau de substrat, dans lequel après la formation de la brosse polymère par le procédé selon la revendication 12 ou 13 sur la surface du matériau de substrat, un catalyseur de placage est fixé à la brosse polymère formée sur ledit matériau de substrat, suivi par l'application de placage sans courant.
